# EUROPÄISCHE PATENTANMELDUNG

(11) **EP 1 172 747 A2**
(43) Veröffentlichungstag der Anmeldung: **16.01.2002**
(21) Anmeldenummer: 01116222.9
(22) Anmeldetag: 04.07.2001
(51) Int. Cl.: G06F 17/60

(54) **Datenverarbeitungs-Werkzeug**

(30) Priorität: 04.07.2000 DE 10032421
(71) Anmelder: WÖLFEL, JÖRG-ULRICH, DR., 85540 HAAR (DE)
(72) Erfinder: WÖLFEL, JÖRG-ULRICH, DR., 85540 HAAR (DE)
(74) Vertreter: Bohnenberger, Johannes, Dr.

(57) **Zusammenfassung**

Datenverarbeitungs-Werkzeug zur Handhabung strukturierter Information in einem Contentmanagement-System, insbesondere zur Realisierung eines Verwaltungs-, Logistik- oder Geschäftsprozesses, mit einer generischen Benutzerführung aus einem ersten System grafischer Benutzeroberflächen zur Modellierung eines Ablaufes zur Handhabung der Information und einem zweiten System grafischer Benutzeroberflächen zur Ausführung des modellierten Ablaufes, wobei das erste und zweite System grafischer Benutzeroberflächen aus Sicht des Nutzers strukturell im wesentlichen übereinstimmen.

## Beschreibung

Die Erfindung betrifft ein Datenverarbeitungs-Werkzeug zur Handhabung strukturierter Information in einem Contentmanagement-System, insbesondere zur Realisierung eines Verwaltungs-, Logistik- oder Geschäftsprozesses, mit einer generischen Benutzerführung. Sie betrifft weiterhin ein Softwareprodukt mit einem solchen Datenverarbeitungs-Werkzeug sowie Verwendungen desselben.

Datenverarbeitungs-Applikationen von Firmen, Behörden und Organisationen etc. sind beim gegenwärtigen Stand der Informationstechnologie komplexe und effiziente Werkzeuge zur Realisierung der täglichen Arbeitsabläufe. Sie sollen auf das Tätigkeitsfeld und die Aufgaben der entsprechenden Firma oder Einrichtung weitgehend optimal zugeschnitten sein, um den Sachbearbeitern die Handhabung mit minimalen Kenntnissen auf dem Gebiet der Informationstechnologie (IT) und dennoch mit hoher Zuverlässigkeit und Effizienz zu ermöglichen.

Größere Firmen und auch staatliche und soziale Einrichtungen investieren daher hohe Beträge in die Entwicklung von Geschäftsapplikationen, die ihren individuellen Bedürfnissen angepaßt sind. Auch bei konzentriertem Einsatz erheblicher Ressourcen beim Entwickler gehen dabei zwischen dem Zeitpunkt der Erkenntnis des Bedarfs bzw. Formulierung des Anforderungsprofils und dem Beginn des Einsatzes der Software für die Spezifikation und Entwicklung in der Regel viele Monate bis Jahre ins Land. Auch die Verfügbarkeit hoch entwickelter Standard-Plattformen - wie etwa der Microsoft-Office-Produktfamilie oder des SAP-Softwaresystems - löst dieses Problem nicht grundsätzlich. Zu beachten ist allerdings, daß die starke Verbreitung standardisierter Anwendungssoftware und darunter speziell des Betriebssystems Windows und der darauf aufbauenden Benutzeroberflächen die Gewohnheiten breitester Kreise der Anwender von Computern im dienstlichen wie privaten Bereich stark geprägt und eine hohe Akzeptanz für auf ähnliche Weise handhabbare Applikationen erzeugt hat.

Das Gesamtgebiet der nachfolgend auch als "Geschäftsapplikationen" bezeichneten anwendungsorientierten Softwarelösungen für primär geschäftliche Abläufe läßt sich in die Teilbereiche der einfachen Standardapplikationen (wie SageKHK), der komplexen Standardapplikationen (wie SAP, Baan), der einfachen individuellen Applikationen (wie Lotus Notes) und der komplexen individuellen Applikationen (wie etwa Softlap Maestro CTW, CASE-Tools, Rational Rose, Select ...) unterteilen. Neben den genannten Beispielen gibt es in diesen Teilbereichen noch weitere Lösungen. Speziell im Teilbereich der komplexen individuellen Applikationen besteht noch Entwicklungsbedarf. Die bekannten und auf dem Markt verfügbaren Lösungen haben - wie etwa die CASE-Tools - weitgehend den Charakter von Programmierwerkzeugen, die in der Hand des IT-Spezialisten auf den konkreten Anwendungsfall bzw. die spezielle Aufgabenstellung zugeschnitten werden müssen.

Der Erfindung liegt daher die Aufgabe zugrunde, ein Datenverarbeitungs-Werkzeug im Bereich der komplexen individuellen Geschäftsapplikationen anzugeben, welches ohne spezielle IT-Kenntnisse individuell auf spezifische Anwendungserfordernisse und Aufgaben anpaßbar ist.

Diese Aufgabe wird durch ein Datenverarbeitungs-Werkzeug mit den Merkmalen des Anspruchs 1 gelöst.

Die Erfindung schließt den grundlegenden Gedanken ein, ein Werkzeug zur Realisierung von Datenverarbeitungslösungen bereitzustellen, welches allein durch Spezialisten für die Strukturierung geschäftlicher bzw. behördlicher Abläufe einerseits und die Sachbearbeiter für die entsprechenden Abläufe andererseits gehandhabt werden kann. Sie schließt weiter den Gedanken ein, für den Entwickler der spezifischen Applikation praktisch das gleiche "Erscheinungsbild" des Werkzeugs bereitzustellen, wie für den späteren Anwender (Sachbearbeiter). Dies führt letztlich zur Bereitstellung eines Framework, dessen Benutzeroberflächen zur Modellierung eines Ablaufes zur Handhabung von Information und zur Ausführung des modellierten Ablaufes im wesentlichen übereinstimmen.

Der Framework-Charakter der vorgeschlagenen Lösung ermöglicht die Schaffung eines modularen Gesamtsystems durch "Einhängen" von generischen Komponenten für die Benutzeroberfläche(n), eine Geschäftslogik und die Datenhaltung. Mit einem insoweit vorgeprägten modularen System kann durch den oder die Spezialisten für die Aufgabenstrukturierung und Arbeitsabläufe bei einem Anwender die konkrete Applikation grundsätzlich ohne jeden Programmiervorgang erstellt und durch die Sachbearbeiter bei der Erfüllung der Aufgaben und Realisierung der Arbeitsabläufe gewissermaßen nachvollzogen werden. Aufgrund dieser klaren Gerüst-Modul-Architektur sind die generischen Komponenten im übrigen leicht durch spezifische bzw. generierte Komponenten austauschbar.

In vorteilhafter Weise sind die erwähnten grafischen Benutzeroberflächen dokumentenorientiert ausgebildet. Während CASE-Anbieter die Tätigkeit von Sachbearbeitern für geschäftliche bzw. behördliche Abläufe mit sogenannten "Use-Case-Programmen", welche den zeitlichen Ablauf darstellen, analysieren, hält der dokumentenorientierte Ansatz Direktkategorien zur gedanklichen Sortierung der anfallenden Tätigkeiten bereit. Dies sind insbesondere die fundamentalen Aktionskategorien "Neu anlegen", "Suchen", "Ansehen", "Ändern" und "Löschen".

Für den Betrieb bzw. die Einrichtung des Anwenders bringt das vorgeschlagene Datenverarbeitungs-Werkzeug vielfältige Vorteile. Der Endnutzer (Sachbearbeiter) sieht sich einer grundsätzlich in ihrer Struktur und Handhabung vertrauten Oberfläche gegenüber, die ihm eine ergonomische und weitgehend einheitliche Handhabung zur Bearbeitung der ihm übertragenen Aufgaben bietet. Er kann mit ein und derselben Anwendung viele verschiedene Arten von Dokumenten editieren, und diese haben ein weitgehend einheitliches Erscheinungsbild und sind in vergleichbarer Weise bearbeitbar. Der die konkrete Anwendung vorbereitende Spezialist für die geschäftlichen Abläufe hat die Datenstruktur und die Abläufe bzw. Geschäftsregeln sowie die Nutzerschnittstelle zu spezifizieren und kann dies in vorteilhafter Weise mit einem Minimum an IT-Qualifikation tun. Für den IT-Manager ergibt sich die Möglichkeit der Schaffung individueller geschäftlicher Lösungen in kurzer Zeit und zu niedrigen Kosten, die leicht zu installieren und zu verwalten und zudem aufgrund entsprechender Standards mit den Softwarelösungen bei Geschäftspartnern kompatibel sind.

### (Weitere Vorteile bevorzugter Ausführungsformen werden weiter unten genannt.)

Weitergehende Regeln für die Tätigkeit von Sachbearbeitern betreffen die Inhalte von Dokumenten und Relationen zwischen diesen. So können zum Beispiel die erlaubten Werte eines Eingabefeldes auf einen bestimmten Bereich eingeschränkt sein, der in Abhängigkeit vom Kontext noch variieren kann. Auch die Formalisierung dieser Anforderungen ist mit der vorgeschlagenen Gerüst-Modul-Struktur möglich. Die mit der Strukturierung der computergestützten Arbeitsabläufe beauftragten Spezialisten einer Fachabteilung können die relevanten Geschäftsregeln hiermit leicht und präzise dokumentieren - und zwar in gleicher Weise dokumentenorientiert, wie dies letztlich für die Ergebnisse der Arbeitsabläufe seitens der Sachbearbeiter geschehen soll.

Das vorgeschlagene Werkzeug bietet auf der Grundlage der dokumentenorientierten Analyse in vorteilhafter Weise eine ergonomische Benutzerführung, die grundsätzlich konform zu den Microsoft-Office-Paketen und dem IBM-Style-Guide ist und daher die oben erwähnte hohe Nutzerakzeptanz sowohl auf der Problemanalyse- wie auch der Sachbearbeitungsebene genießt. Hierzu gehört, daß beispielsweise die Suche in einer Datenbank im Rahmen eines betrieblichen oder behördlichen Kontent-Systems auf den aus den erwähnten Produkten bekannten Datei-Öffnen-Dialog abgebildet wird.

In einer weiteren vorteilhaften Ausprägung zeichnet sich das vorgeschlagene Werkzeug - neben dem einheitlichen Stil der Benutzerführung - durch einen einheitlichen Stil für die Datenablage aus, der auf dem (an sich bekannten) Repository beruht. Die hiermit realisierte generische Datenhaltung korelliert in vorteilhafter Weise mit der generischen Benutzerführung.

Mit dieser Art der Datenhaltung ermöglicht es das vorgeschlagene Datenverarbeitungs-Werkzeug, sofort nach der fachlichen Analyse eine vollständige Applikation mit Benutzerführung, Geschäftslogik und Datenhaltung bereitzustellen, die exakt die fachlich spezifizierten Aspekte reflektiert. Damit erhalten die mit der Entwicklung der Applikation beauftragten Spezialisten sofort eine verläßliche Rückkopplung, ob die Spezifikation mit der ursprünglichen Intention übereinstimmt. Die sofort ablauffähige generische Applikation wird in einem in sich abgeschlossenen System bereitgestellt, das grundsätzlich weder einen Zugriff zum Internet noch die Anbindung an einen IBM-Host oder irgendwelche integrierten Office-Applikationen benötigt.

Die vom objektorientierten Entwurf bekannten Strukturen des Repository werden in der bevorzugten Ausführung des vorgeschlagenen Werkzeuges - in Form von als Dokumenten "verkleideten" Objekten - benutzt, womit sich das Werkzeug die Universalität dieser Strukturen und deren Erweiterungsmöglichkeit zu eigen macht. Bei Notwendigkeit lassen sich zusätzliche fachliche Spezifikationsmöglichkeiten strukturiert ergänzen. Außerdem ist es möglich, zusätzlich Module in einer 3GL-Sprache, wie Visual Basic, Java oder C++, zu generieren und zu überarbeiten, um damit - nun allerdings durch einen eingeschalteten IT-Spezialisten - strukturelle Limitierungen zu überwinden. Eine generische, interpretierende Geschäftslogik kann dann durch generierten Source-Code bzw. kompilierte Module ersetzt werden.

Der Austausch von Modulen auf der Datenebene ermöglicht im übrigen die Einbindung vorhandener Systeme, wie des IBM-Host. Eine Einbindung des Werkzeugs in ein Intranet und insbesondere das Internet (die obigem für die Funktionsfähigkeit des Werkzeugs nicht erforderlich, aber für zukunftssicher strukturierte Applikationen als unabdingbar anzusehen ist) erfolgt sowohl über die Präsentationsebene wie auch die Datenebene. In diesem Kontext fungiert das vorgeschlagene Werkzeug zugleich als Internet-Browser für strukturierte Informationen.

Das erwähnte Repository bietet eine natürliche Gliederung der abgelegten Spezifikationen in Bibliotheken an. Hieraus läßt sich eine bevorzugte Anwendung ableiten, bei der das vorgeschlagene Werkzeug standardisiert Bibliotheken mit bestimmtem Fachwissen (Content) anbietet - und zwar mit dem interessanten Merkmal der leichten Anpaßbarkeit der Bibliotheken an individuelle Bedürfnisse.

Eine vorteilhaft abgerundete Ausführung bietet eine Workflow-Komponente zur Abbildung eines vorbestimmten Dokumentenumlaufes zwischen einer Mehrzahl von Bearbeitern im Rahmen der Handhabung fachlicher Informationen. Der vorteilhaft dokumentenorientierte Charakter der Applikationen ermöglicht die Organisation eines Umlaufes von Ordnern, wobei diese durch eine etablierte externe Komponente (zum Beispiel Microsoft-Exchange) realisiert wird.

Vorteile und Zweckmäßigkeiten der Erfindung ergeben sich im übrigen aus den Unteransprüchen sowie der nachfolgenden Beschreibung bevorzugter Ausführungsbeispiele und -aspekte anhand der Figuren. Von diesen zeigen:
- Fig. 1: eine synoptische Darstellung eines Schirmbildes bei einer Ausführungsform der Erfindung aus Sicht des Programmierers,
- Fig. 2: eine Ausschnittdarstellung eines die Nutzerschnittstelle betreffenden Schirmbildes bei dieser Ausführungsform aus Sicht des die Applikation implementierenden Spezialisten für geschäftliche Abläufe,
- Fig. 3: eine Ausschnittdarstellung eines den Datenvorrat betreffenden Schirmbildes bei dieser Ausführungsform aus Sicht des die Applikation implementierenden Spezialisten für geschäftliche Abläufe,
- Fig. 4: eine Ausschnittdarstellung eines Schirmbildes bei dieser Ausführung aus Sicht des Sachbearbeiters und
- Fig. 5: ein Schirmbild aus Sicht des Sachbearbeiters bei einem anderen Anwendungsbeispiel.

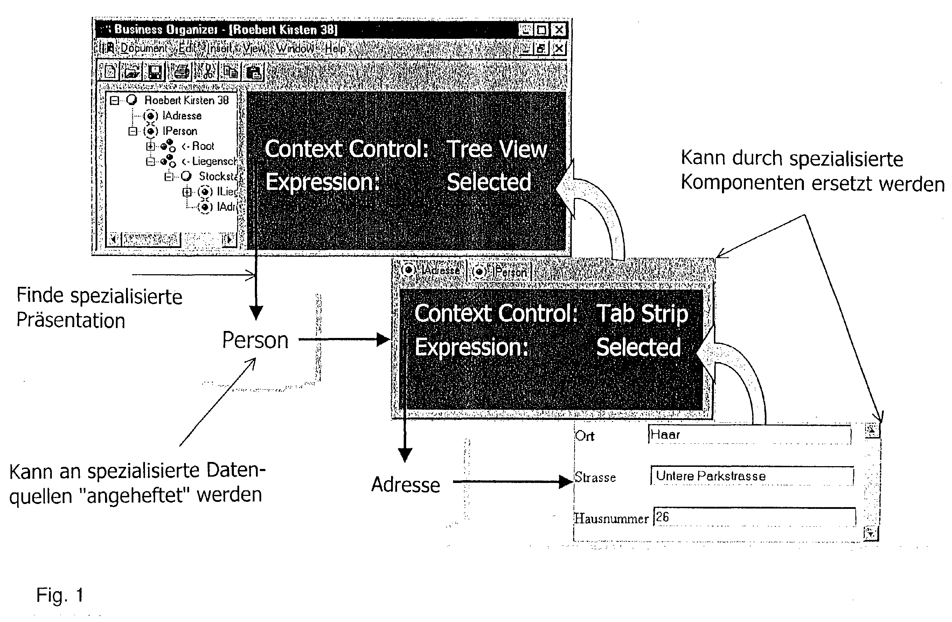

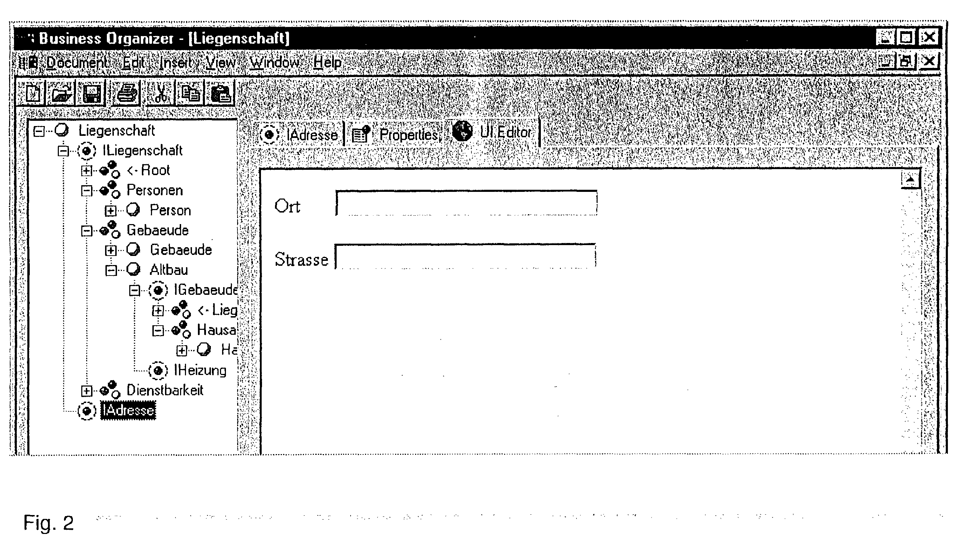

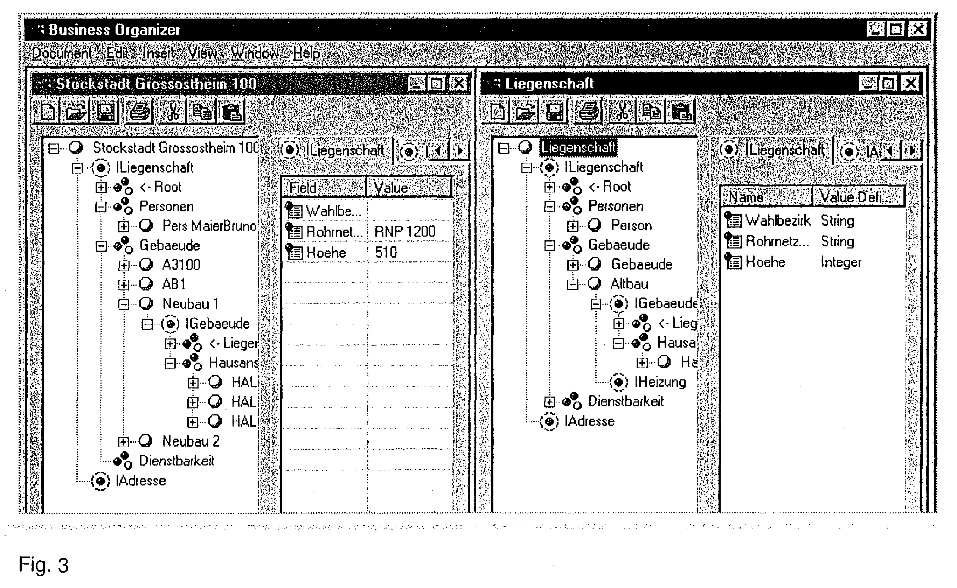

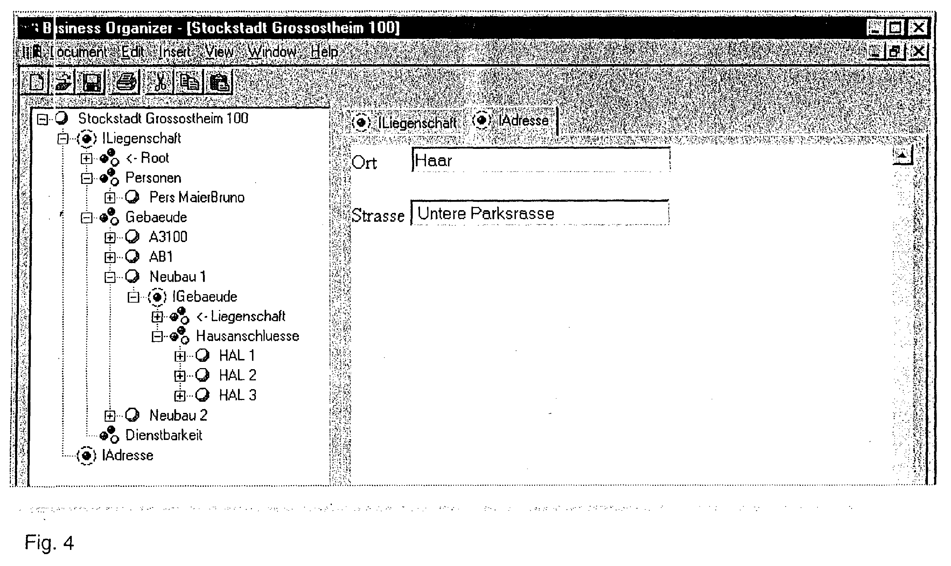

In den Figuren 1 bis 4 ist am Beispiel von Schirmdarstellungen für die verschiedenen Bearbeiterprofile (Fig. 1: IT-Spezialist bzw. Programmierer, Fig. 2 und 3: Spezialist für die geschäftlichen Abläufe, Fig. 4: Sachbearbeiter der Geschäftsvorfälle) ein Datenverarbeitungs-Werkzeug gemäß einer Ausführungsform der Erfindung für ein Kundeninformations- und -aquisitionssystem eines Stromversorgers näher dargestellt. Bei diesem Anwendungsbeispiel bietet die erfindungsgemäße Lösung das Potential einer Reduzierung der Entwicklungs- und Wartungszeit und -ressourcen auf etwa 1/10.

Die Darstellungen sind im wesentlichen selbsterklärend, so daß eine genauere Beschreibung hier nicht erforderlich ist. In Fig. 3 ist besonders gut die Entsprechung zwischen der für die Implementierung der Applikation eingesetzten Benutzeroberfläche (rechts) und der später vom Sachbearbeiter wahrgenommenen Oberfläche (links) zu erkennen. Weiterhin ist in allen Figuren gut die Dokumentenorientiertheit des Werkzeugs zu sehen. Auch die äußerliche Ähnlichkeit zu Microsoft-Office-Applikationen, die dem Nutzer den Umgang mit dem Werkzeug erleichtert, ist augenfällig.

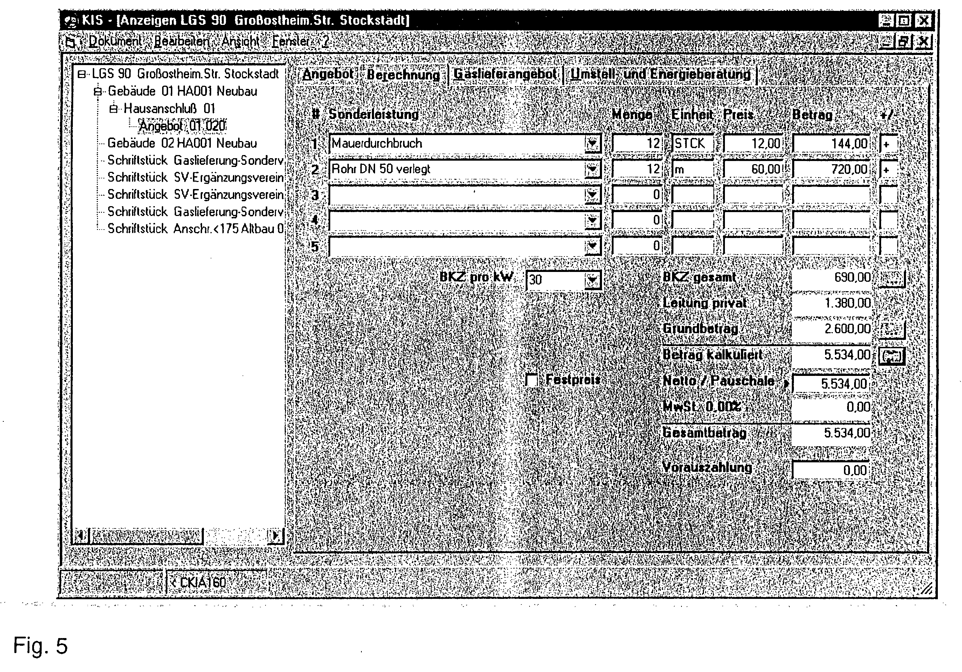

Fig. 5 zeigt das für den Sachbearbeiter wahrnehmbare Schirmbild zur Erstellung eines Angebotes bzw. einer Rechnung speziell für Bauleistungen eines Gasversorgers.

Die Ausführung der Erfindung ist nicht auf diese und ähnliche Beispiele beschränkt, sondern im Rahmen der Ansprüche in einer Vielzahl von Abwandlungen möglich, die im Bereich fachgemäßen Handelns liegen.

## Patentansprüche

1. Datenverarbeitungs-Werkzeug zur Handhabung strukturierter Information in einem Contentmanagement-System, insbesondere zur Realisierung eines Verwaltungs-, Logistik- oder Geschäftsprozesses, mit einer generischen Benutzerführung aus
einem ersten System grafischer Benutzeroberflächen zur Modellierung eines Ablaufes zur Handhabung der Information und
einem zweiten System grafischer Benutzeroberflächen zur Ausführung des modellierten Ablaufes,
wobei das erste und zweite System grafischer Benutzeroberflächen aus Sicht des Nutzers strukturell im wesentlichen übereinstimmen.

2. Datenverarbeitungs-Werkzeug nach Anspruch 1,
**dadurch gekennzeichnet, daß**
die grafischen Benutzeroberflächen des ersten und zweiten Systems in im wesentlichen gleicher Weise dokumentenorientiert ausgebildet sind.

3. Datenverarbeitungs-Werkzeug nach Anspruch 2,
**dadurch gekennzeichnet, daß**
die grafischen Benutzeroberflächen des ersten und zweiten Systems jeweils die grundlegenden Aktionskategorien "Neu Anlegen", "Suchen", "Ansehen", "Ändern" und "Löschen" umfassen.

4. Datenverarbeitungs-Werkzeug nach einem der vorangehenden Ansprüche,
**dadurch gekennzeichnet, daß**
die Suche in einer Datenbank in den grafischen Benutzeroberflächen des ersten und zweiten Systems auf einen Datei-Öffnen-Dialog abgebildet ist.

5. Datenverarbeitungs-Werkzeug nach einem der vorangehenden Ansprüche,
**gekennzeichnet durch**
eine generische Datenhaltung mittels Repositories aus einer objektorientierten Struktur und deren Meta-Strukturen auf Basis einer relationalen Datenbank.

6. Datenverarbeitungs-Werkzeug nach einem der vorangehenden Ansprüche,
**gekennzeichnet durch**
einen Gerüst-Modul-Aufbau, wobei die generischen Komponenten für die Benutzeroberflächen des ersten und zweiten Systems, den Ablauf zur Handhabung der Information und die Datenhaltung als austauschbare Module in ein Programmgerüst eingefügt sind.

7. Datenverarbeitungs-Werkzeug nach Anspruch 6,
**dadurch gekennzeichnet, daß**
generierte Source-Code- oder kompilierte Module zum Ersatz generischer Komponenten für den Ablauf zur Handhabung der Information vorgesehen sind.

8. Datenverarbeitungs-Werkzeug nach einem der Ansprüche 2 bis 7,
**gekennzeichnet durch**
eine Workflow-Komponente zur Abbildung eines vorbestimmten Dokumentenumlaufes zwischen einer Mehrzahl von Bearbeitern im Rahmen der Handhabung der Information.

9. Softwareprodukt mit einem Datenverarbeitungs-Werkzeug nach einem der vorangehenden Ansprüche, gespeichert auf einem Datenträger oder in einer Datenbasis eines Datennetzes, insbesondere des Internet oder eines Intranet.

10. Verwendung des Datenverarbeitungs-Werkzeuges nach einem der Ansprüche 1 bis 8 zur Realisierung eines Verwaltungs-, Logistik- oder Geschäftsprozesses.

11. Verwendung eines Datenverarbeitungs-Werkzeuges nach einem der Ansprüche 1 bis 8 zur Realisierung einer Informationsbibliothek.
